# EUROPÄISCHE PATENTSCHRIFT

(11) **EP 0 711 924 B1**
(45) Veröffentlichungstag und Bekanntmachung des Hinweises auf die Patenterteilung: **13.05.1998**
(21) Anmeldenummer: 95111124.4
(22) Anmeldetag: 15.07.1995
(51) Int. Cl.: F04D 29/66, F04D 17/16, F04D 29/02

(54) **Elektrisch angetriebene Luftpumpe**
Electric motor-driven air pump
Pompe à air entraînée par un moteur électrique

(30) Priorität: 29.10.1994 DE 4438750
(43) Veröffentlichungstag der Anmeldung: 15.05.1996
(73) Patentinhaber: Pierburg Aktiengesellschaft, 41460 Neuss (DE)
(72) Erfinder: van de Venne, Günter, D-41238 Mönchengladbach (DE); Peters, Rainer, D-47574 Goch (DE); Muckelmann, Klaus, D-40545 Düsseldorf (DE)

(56) Entgegenhaltungen:
- EP-A- 0 385 298
- EP-A- 0 607 515
- DE-A- 3 038 298
- DE-A- 4 107 049
- DE-U- 8 904 338
- DE-U- 9 303 470
- DATABASE WPI Section Ch, Week 7502 Derwent Publications Ltd., London, GB; Class A88, AN 75-02201w & DE-A-23 28 653 (KLEIN SCHANZLIN BECKER)

## Beschreibung

Die Erfindung betrifft eine elektrisch angetriebene Luftpumpe, beispielsweise für Kraftfahrzeuge, bei denen sogenannte Sekundärluft in das Abgasrohrsystem gefördert werden soll, um die Abgaswerte zu verbessern.

Bei einer derartigen Pumpe (EPA 0 385 298 A2) besteht das Problem, daß ihr Betrieb aufgrund von Unwuchten des Laufrades und des Elektromotors sowie des entstehenden magnetischen Drehfeldes unvermeidbar mit mehr oder weniger Vibrationen verbunden ist, die sich auf die Einrichtung, an der die Pumpe angeschlossen ist bzw. an der sie befestigt ist, übertragen und ein hochfrequentes Laufgeräusch verursachen.

Aus der DE-A1 41 07 049 ist eine gattungsgemäße Luftpumpe bekannt, die mit Merkmalen ausgestattet ist, mit denen eine Verringerung der Vibrationen und der Laufgeräusche erzielt werden soll.

Diese Merkmale bestehen im wesentlichen darin, daß der Elektromotor mittels zweier Elastomerringe zwischen Elektromotor und Gehäuselagerung abgestützt ist, die in einer besonderen Art zwischen Elektromotor und Gehäuse angeordnet sind.

Es hat sich nun gezeigt, daß diese Maßnahmen insgesamt zu einer Verringerung der Vibrationen und der Laufgeräusche führen, wobei jedoch von Luftpumpe zu Luftpumpe größere Unterschiede - Exemplarstreuungen - auftreten.

Aus der DE-U1 93 03 470 ist ein Gebläse bekannt, bei der ein ein Wuchtgewicht aufweisendes Bauteil durch eine Gehäuseöffnung eingesetzt und auf einer Nabe des Gebläserades ausgerichtet und festgesetzt werden kann. Die Wuchtgewichte weisen ausgewählte Größen auf zum Ausgleich verschieden großer Unwuchten. Hierdurch wird eine Großserienfertigung erschwert.

Der Erfindung liegt die Aufgabe zugrunde, ein Verfahren zur Herstellung einer Luftpumpe mit verringerten Vibrationen bzw. verringertem Laufgeräusch zu schaffen, bei der Exemplarstreuungen vermindert sind, d. h. die Laufgeräusche von Luftpumpe zu Luftpumpe nur noch innerhalb einer verringerten Streubreite auftreten, wobei darüber hinaus ein vereinfachter Pumpenaufbau erreicht werden soll.

Diese Aufgabe ist bei dem angegebenen Verfahren zur Herstellund einer Luftpumpe durch die im Patentanspruch 1 angegebenen Merkmale gelöst worden. Vorteilhafte Weiterbildungen sind mit den Unteransprüchen angegeben.

Die Erfindung basiert auf der Erkenntnis, daß die größere Streubreite der Laufgeräusche, trotz Verwendung von Elektromotoren, die als Einzelteil mit montierten Laufrädern ausgewuchtet wurden, im Zusammenwirken mit den weiteren Bauteilen bewirkt wird, d. h. hier können bei einzelnen Pumpen erneute Unwuchten entstehen (kritische Drehzahlen), die ein lauteres Laufgeräusch bewirken.

Dieser Nachteil soll nach der Erfindung dadurch beseitigt werden, daß zusätzlich oder einmalig der Elektromotor mit montierten Pumpenlaufrädern in eingebautem Zustand, bei noch nicht verschlossener Pumpenseite ausgewuchtet wird.

Mit der Erfindung erzielbare Vorteile sind in der nachfolgenden Beschreibung eines Ausführungsbeispiels der Erfindung angegeben, das in der Zeichnung dargestellt ist.

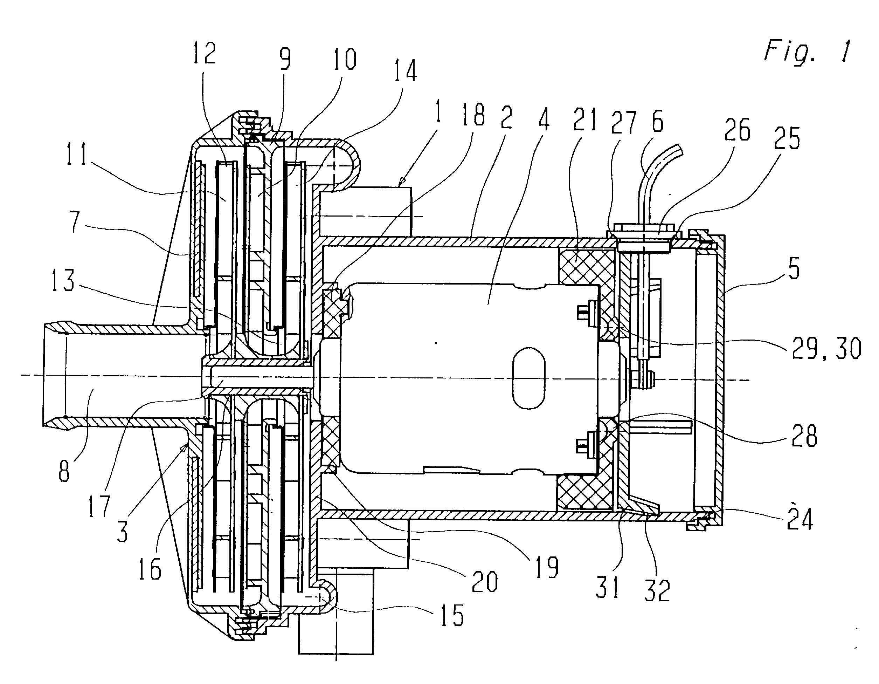

Diese zeigt:
**Figur 1**
   ein Ausführungsbeispiel nach der Erfindung;
**Figur 2**
   Einzelheit aus Figur 1.

Figur 1 zeigt die erfindungsgemäße Luftpumpe 1, bestehend aus einem in Kunststoff gefertigten Gehäuse 2, das einerseits ein Pumpenwerk 3 aufnimmt und andererseits einen Elektromotor 4. Das Gehäuse 1 ist auf der Elektromotorseite von einem Deckel 5 verschlossen und weist herausgeführte elektrische Anschlußkabel 6 für den Elektromotor 4 auf. Die Pumpenwerkseite ist von einem Deckel 7 verschlossen, der einen Luftzuführanschluß 8 aufweist. Zwischen Deckel 7 und Gehäuse 2 ist bei dieser Luftpumpe 1 ein Leitrad 9 eingesetzt, das Leitkanäle 10 aufweist, mit denen die von einem 1. Laufrad 11 geförderte Luft vom äußeren Laufradaustritt 12 wiederum dem inneren Laufradeintritt 13 eines weiteren Laufrades 14 zugeführt wird. Es versteht sich von selbst, daß mit jeder weiteren Pumpenstufe ein weiteres Leitrad 9 eingesetzt wird. Das Gehäuse 2 weist im Bereich des letzten Laufrades 14 einen ringförmigen Kanal 15 auf, in den die Luft aus dem Laufrad 14 austritt und zu einem Druckanschluß geführt wird. Die beiden Laufräder 11, 14 sind mit ihren Naben 16 auf einer Welle 17 des Elektromotors 4 befestigt, die in die Pumpenwerkseite hineinragt.

Der Elektromotor 4 ist mittels eines ersten Elastomerringes 18 in einer Ausnehmung 19 einer die Pumpenwerkseite von der Elektromotorseite trennenden Gehäusewand 20 und eines zweiten Elastomerringes 21 gehalten.

Erfindungsgemäß ist nun bei einem Verfahren zur Herstellung dieser Luftpumpe 1 vorgesehen, daß der Elektromotor 4 mit montierten Pumpenlaufrädern 11, 14 in eingebautem Zustand, bei noch nicht verschlossener Pumpenseite durch Setzen von Auswuchtmarken an dem ersten Laufrad 11 ausgewuchtet wird, wobei zwischen den Laufrädern 11, 14 das Leitrad 9 angeordnet ist, daß radial, axial und unverdrehbar im Gehäuse 2 gehalten ist und bei der Deckelmontage, die Pumpendruckstufen voneinander trennend abgedichtet wird.

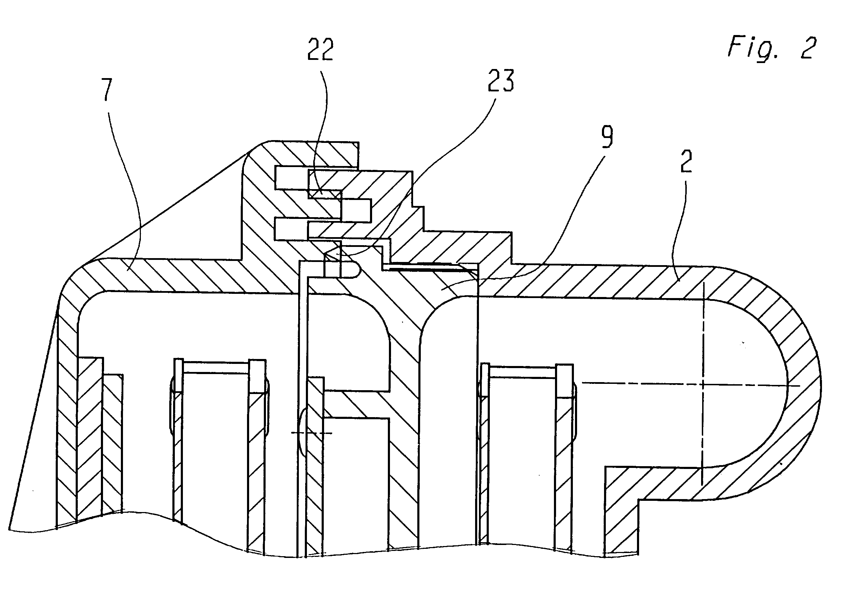

Vorteilhafterweise ist vorgesehen, daß der Deckel 7, das Leitrad 9 und das Gehäuse 2 aus Kunststoff bestehen und durch Reibschweißen verbunden und abgedichtet sind, wobei bei der Zusammenfügung der Bauteile vor dem Reibschweißen in den Verschweißungszonen 22, 23 eine elastische/plastische Verformung von einander berührenden Wänden des Deckels 7, des Leitrades 9 und des Gehäuses 2 vorliegt, wie in Figur 2 dargestellt ist, die eine vergrößerte Einzelheit aus Figur 1 zeigt.

Es ist vorgesehen, daß eine Öffnung 25 zur Durchführung von Elektromotor-Anschlußkabeln rechtwinklig zur Motorachse aus dem Gehäuse 2 herausgeführt ist und daß diese Öffnung 25 sowie die Motorseite unter Zusammenfügung mit einer Verschlußkappe 26 bzw. mit dem Deckel 5 der Motorseite, die beide aus Kunststoff bestehen, unter elastisch plastischer Verformung von Wänden der Bauteile verschlossen und durch Reibschweißen verbunden und abgedichtet sind.

Eine besonders einfache Ausführung ist gegeben, wenn der Elastomerring 21 zwischen Elektromotor 4 und Deckel 5 eine in Axialrichtung elastisch verformbare Auswulstung 28 aufweist, die durch eine Axialfläche 29 eines Stützringes 30 belastet wird, die mit Klippsvorsprüngen 31 in entsprechende Ausnehmungen 32 des Gehäuses 2 einrasten. Diese Ausführung verringert das Laufgeräusch und vereinfacht die Montage unter Fortfall von Einzelteilen.

## Patentansprüche

1. Verfahren zur Herstellung einer elektrisch angetriebenen Luftpumpe, bestehend aus einem Gehäuse (2) mit auf einer Seite angeordnetem Pumpenwerk (3) und auf der anderen Seite angeordnetem Elektromotor (4), wobei Pumpen- und Motorseite des Gehäuses (2) durch Deckel (7 und 5) verschlossen werden und der Elektromotor (4) mittels zweier Elastomerringe zwischen Elektromotor und Gehäuselagerung abgestützt ist, wobei der Elektromotor (4) mit montiertem Pumpenrad in eingebautem Zustand bei noch nicht verschlossener Pumpenseite durch Setzen von Auswuchtmarken an einem Laufrad (11) des Pumpenrades ausgewuchtet wird.

2. Verfahren nach Anspruch 1, **dadurch gekennzeichnet**, daß das Pumpenrad zwei- oder mehrstufig ausgeführt und jedem zweiten oder weiteren Laufrad (14) ein Leitrad (9) zugeordnet ist.

3. Verfahren nach Anspruch 2, **dadurch gekennzeichnet**, daß der Deckel (7) oder die Leiträder (9) und das Gehäuse (2) aus Kunststoff bestehen und durch Reibschweißen verbunden und abgedichtet sind.

4. Verfahren nach Anspruch 3, **dadurch gekennzeichnet**, daß bei der Zusammenfügung der Bauteile vor dem Reibschweißen in den Verschweißungszonen (22, 23) eine elastische/plastische Verformung von einander berührenden Wänden des Deckels (7), des Leitrades (9) und des Gehäuses (2) vorliegt.

5. Verfahren nach Anspruch 1, **dadurch gekennzeichnet**, daß eine Öffnung (25) zur Durchführung von Elektromotor-Anschlußkabeln rechtwinklig zur Motorachse aus dem Gehäuse (2) herausgeführt ist und daß diese Öffnung (25) sowie die Motorseite unter Zusammenfügung mit einer Verschlußkappe (26) bzw. mit dem Deckel (5) der Motorseite, die beide aus Kunststoff bestehen, unter elastisch plastischer Verformung von Wänden der Bauteile verschlossen und durch Reibschweißen verbunden und abgedichtet sind.

## Claims

1. Method for manufacturing an electrically-powered air pump, consisting of a casing (2) with a pump unit (3) arranged on one side and an electric motor (4) arranged on the other side, the pump and motor sides of the casing (2) being closed by covers (7 and 5) and the electric motor (4) being supported by means of two elastomer rings between the electric motor (4) and the casing bearing assembly, in which the electric motor (4) with pump impeller fitted is balanced in the installed state with the pump side not yet closed by placing balancing marks on an impeller (11) of the pump impeller.

2. Method according to claim 1, characterized in that the pump impeller is executed in two or more stages and assigned to each second or further impeller (14) is a guide wheel (9).

3. Method according to claim 2, characterized in that the cover (7) or the guide wheels (9) and the casing (2) consist of synthetic material and are joined and sealed by friction welding.

4. Method according to claim 3, characterized in that on assembly of the components prior to friction welding in the welding zones (22, 23), elastic/plastic deformation of walls of the cover (7), the guide wheel (9) and the casing (2) in contact with one another takes place.

5. Method according to claim 1, characterized in that an opening (25) for leading electric motor connection cables through is led out of the casing (2) at right angles to the motor axis and that this opening (25) and the motor side are closed on assembly with a sealing cap (26) or the cover (5) of the motor side, which both consist of synthetic material, under elastically plastic deformation of walls of the components and are joined and sealed by friction welding.

## Revendications

1. Procédé de fabrication d'une pompe à air entraînée par un moteur électrique, comprenant un carter (2) avec un mécanisme de pompe (3) disposé d'un côté et un mcteur électrique (4) disposé de l'autre côté, les côtés pompe et moteur du carter (2) étant fermés par des couvercles (7 et 5) et le moteur électrique (4) étant supporté au moyen de deux bagues d'élastomère entre le moteur électrique et le support du carter, le moteur électrique (4) avec la roue de pompe montée étant équilibré, à l'état monté, lorsque le côté pompe n'est pas encore fermé, par la mise en place de plots d'équilibrage sur une roue mobile (11) de la roue de pompe.

2. Procédé selon la revendication 1, **caractérisée en ce** que la roue de pompe est réalisée à deux étages ou plus et qu'à chaque deuxième roue mobile et roue mobile supplémentaire (14) est associée une roue directrice (9).

3. Procédé selon la revendication 2, caractérisé en ce que le couvercle (7) ou les roues directrices (9) et le carter (2) sont réalisés en matière plastique et réunis et rendus étanche par soudure par friction.

4. Procédé selon la revendication 3, caractérisé en ce que lors de l'assemblage des éléments de construction, il se produit, avant la soudure par friction, dans les zones de soudure (22, 23), une déformation élastique/plastique des parois en contact du couvercle (7), de la roue directrice (9) et du carter (2).

5. Procédé selon la revendication 1, caractérisé en ce qu'une ouverture (25) pour le passage des câbles d'alimentation du moteur électrique sort du carter (2) orthogonalement à l'axe du moteur, et que ladite ouverture (25) ainsi que le côté moteur sont fermés, lors de la mise en place d'un chapeau de fermeture (26) et respectivement du couvercle (5) du côté moteur, réalisés tous deux en matière plastique, avec déformation plastique des parois des éléments de construction, et réunis et rendus étanches par soudure par friction.
